# EUROPÄISCHE PATENTSCHRIFT

(11) **EP 0 964 755 B1**
(45) Veröffentlichungstag und Bekanntmachung des Hinweises auf die Patenterteilung: **15.05.2002**
(21) Anmeldenummer: 98912234.6
(22) Anmeldetag: 13.02.1998
(51) Int. Cl.: B09C 1/02, C02F 1/36, C02F 11/12

(54) **VERFAHREN UND VORRICHTUNG ZUR AUFBEREITUNG VON MATERIAL**
METHOD AND DEVICE FOR PROCESSING MATERIAL
PROCEDE ET DISPOSITIF DE TRAITEMENT DE MATIERE

(30) Priorität: 03.03.1997 DE 19708411
(43) Veröffentlichungstag der Anmeldung: 22.12.1999
(73) Patentinhaber: ANTON MÜSING GmbH & CO. KG, D-26810 Westoverledingen (DE)
(72) Erfinder: WÄCHTER, Gerhard, D-26817 Rhauderfehn (DE)
(74) Vertreter: Herrmann-Trentepohl, Werner, Dipl.-Ing.
(86) Internationale Anmeldenummer: DE9800438
(87) Internationale Veröffentlichungsnummer: WO9839115

(56) Entgegenhaltungen:
- WO-A-97/02088
- DE-A- 3 728 201
- DE-A- 4 217 987
- DE-A- 4 447 260
- DE-U- 9 421 697

## Beschreibung

Die Erfindung betrifft eine Vorrichtung zur Aufbereitung, insbesondere umfassend eine Dekontamination, von Material, vorzugsweise von Sedimentationsablagerungen vom Grund eines Gewässers oder aus Ölabscheidern, Sandfängen oder dergleichen gemäß des Oberbegriffs des Anspruchs 1.

Eine Vorrichtung zur Materialaufbereitung ist prinzipiell aus der DE-OS 44 47 260.9 bekannt.

Mit der bekannten Vorrichtung werden insbesondere auch Dekontaminationen durchgeführt, und zwar mit Hilfe einer Druckluftbeaufschlagung des Materials, um die Dekontaminationen von den Festanteilen des aufzubereitenden Materials, an denen sie anlagern, derart zu trennen, daß sie in eine flüssige Phase gelangen, die in anderer Weise aufbereitet wird, um jedenfalls die Grobanteile zu dekontaminieren und ablagern bzw. verwenden zu können.

Weitere Materialaufbereitungsverfahren sind auch aus der DE-A- 37 28 201, der DE-A- 42 17 987 und der WO 97/02088 bekannt. Insbesondere schildern die drei genannten Druckschriften Materialaufbereitungsverfahren unter Verwendung von Ultraschall, bei denen Kontaminierungen von Materialteilchen abgetrennt werden.

Eine gattungsgemäße Vorrichtung offenbart das DE-U- 94 21 697.

Dieses Gebrauchsmuster offenbart eine Vorrichtung zum Aufspalten von Stoffgemischen und zum Abtrennen von Stoffen mittels Ultraschall. Die Beschallung geschieht dabei in einem Beschallungsraum, in dessen Boden entsprechende Ultraschallquellen eingebracht sind, um den Boden bzw. den Inhalt des Beschallungsraumes anzuregen.

Der Erfindung liegt die Aufgabe zugrunde, eine alternative Vorrichtung zu bekannten Vorrichtungen aufzuzeigen, die besonders effektiv bzw. optimierbar für die Aufbereitung fließfähigen Materials ist.

Diese Aufgabe wird erfindungsgemäß durch die kennzeichnenden Merkmale des Anspruchs 1 gelöst.

In die Rinne der erfindungsgemäßen Vorrichtung wird fließfähiges aufzubereitendes Material eingegeben, das unter Umständen durch Zuführung von Wasser erst einmal fließfähig gemacht wird. Dieses fließfähige Material wird entsprechend energiebeaufschlagt. Dabei wird im Rahmen der erfindungsgemäßen Vorrichtung vorzugsweise durch Klassierung immer eine etwas dickere bzw. festere Phase von einer flüssigen Phase getrennt und jeweils die flüssigere Phase für eine Dekontaminierung energiebeaufschlagt. Allerdings kann auch die dickflüssigere Phase energiebeaufschlagt werden, um zunächst einmal Agglomerate aufzuspalten, damit anschließend diese Spaltprodukte entsprechend ihrer Größe bei einer nächsten Klassierung, beispielsweise unter Verwendung eines Zyklons, in die flüssigere Phase gelangen, die der Dekontamination, vorzugsweise in derselben Ultraschallbeaufschlagungs-Einrichtung, zugeführt wird.

Gegebenenfalls kann jeweils bei dem erfindungsgemäßen Verfahren freiwerdendes bzw. verwendetes Prozeßwasser, notfalls nach einer entsprechenden Aufbereitung, als Prozeßwasser wiederverwendet werden, indem es zum Erhalt bzw. zur Begründung der Fließfähigkeit des aufzubereitenden Material dem Material an verschiedenen Stationen zugesetzt wird.

Die Fließfähigkeit des Materials ermöglicht insbesondere die Durchführung von Kreisprozessen, bei denen das aufzubereitende Material unter Umständen dieselben Stationen in Umläufen, gegebenenfalls sogar mehrfach, durchläuft. Das Material ist dabei pumpfähig und kann durch Ventile und dergleichen wahlweise durch vorgebbare Aufbereitungszweige geleitet werden.

Insbesondere kann die Fließfähigkeit des Materials bzw. der Gehalt des Wassers oder einer anderen Flüssigkeit in dem Material bei der Energiebeaufschlagung mit Ultraschall für die Erzielung der gewünschten Abtrennungseffekte genutzt werden. Die Energiebeaufschlagung mit Ultraschall erzeugt nämlich in dem fließfähigen Material Kavitationen. Dies bedeutet, daß durch die Beaufschlagung mit Ultraschall das aufzubereitende Material in relativ hochfrequente Schwingungen versetzt wird, durch die je nach Schwingungsrichtung periodisch der Druck in dem fließfähigen Material einmal den Dampfdruck der Flüssigkeit unterschreitet und einmal wieder übersteigt. Hierdurch bilden sich bei niedrigerem Druck Blasen in dem Material aus, die bei der nächsten periodischen Erhöhung des Druckes wieder zusammenfallen. Bei diesem Zusammenfallen der Blasen entsteht in dem aufzubereitenden Material unter Umständen lokal ein Druck von 5 x 10⁷ Pa und eine Temperatur von 5000 K. Durch den entstehenden Druck wird der in den zuvor vorhandenen Blasen enthaltene Sauerstoff durch jegliche in dem aufzubereitenden Material vorhandene Korngrenzen gepreßt, wodurch zwangsweise Agglomerationen aufgelöst und Schadstoffe von Feststoffen, an denen sie anlagern, getrennt werden. Selbst chemische Bindungen können unter Umständen durch eine solche effektive Energiebeaufschlagung gelöst werden, wobei allerdings dann die Gefahr der Wiederanlagerung besteht. Die Lösung chemischer Bindungen kann begünstigt werden und die Wiederanlagerung kann verhindert werden, indem dem aufzubereitenden Material Hilfsstoffe zugesetzt werden, z.B. Tenside oder ähnliche Substanzen.

Weiter kann die Energiebeaufschlagung bei Verwendung von fließfähigem Material durch die Fließfähigkeit gesteuert erfolgen. Dazu durchläuft das fließfähige Material im Bereich der Energiebeaufschlagung ein Gefälle der neigungsverstellbaren Rinne, wobei durch Einstellung und Vorgabe der Fließgeschwindigkeit gleichzeitig die Verweildauer, und damit die Bearbeitungsdauer, vorgegeben werden kann. Wie bereits erwähnt, kann eine entsprechende Rinne auch mehrfach durchlaufen werden. Die entsprechend vorhandene Einrichtung kann also gezielter und optimierter ausgenutzt werden.

Außerdem kann auf die geschilderte Weise die Bearbeitungsstrecke im Hinblick auf die mehrfache Nutzbarkeit durch mehrfache Umläufe insgesamt kompakter und verkürzt bereitgestellt werden. Dies gilt auch für übrige Komponenten einer erfindungsgemäßen Vorrichtung, so daß aufgrund der Verwendung von fließfähigem Material die zu verwendende Vorrichtung sehr kompakt ausgebildet, insbesondere mobil ausgebildet werden kann, und dennoch ein sehr hoher Durchsatz von aufzubereitendem Material gewährleistet werden kann.

Die Ultraschallquellen sind vorzugsweise gleichmäßig verteilt am Boden der Rinne angeordnet und erfassen wenigstens einen Abschnitt dieses Bodens. Beispielsweise können die Ultraschallquellen matrixartig angeordnet sein, d.h. weitgehend in Reihen bzw. Linien über eine Fläche verteilt, unter Umständen dicht an dicht, angeordnet sein.

Dabei befinden sich die Ultraschallquellen in Kontaktanlage mit der Unterseite des Bodens. Hierfür können die Ultraschallquellen beispielsweise mit einem geeigneten Klebemittel oder mit sonstigem Verbindungsmaterial, z.B. Lot oder auch Nieten, an der Unterseite des Bodens befestigt sein.

In diesem Zusammenhang soll erwähnt werden, daß die Ultraschallquellen nicht unbedingt nur am Boden angeordnet sein müssen, sondern daß auch eine andere Orientierung und Anordnung bzw. Zuordnung der Ultraschallquellen, beispielsweise in Wandungsbereichen oder dergleichen denkbar wäre.

Die erfindungsgemäße Vorrichtung umfaßt vorzugsweise wenigstens eine Klassierungseinrichtung, z.B. ein Zyklon, mit der grobere Anieile von feineren Anteilen des aufzubereitenden Materials getrennt werden. Eventuelle kontaminierende Schadstoffe haften dabei vorrangig und mit höherer Wahrscheinlichkeit an den feineren Bestandteilen des aufzubereitenden Materials an, da diese feineren Anteile eine spezifisch größere Oberfläche aufweisen als die entsprechenden Grobanteile. Daher kann normalerweise mit einer hohen Wahrscheinlichkeit davon ausgegangen werden, daß die über eine Klassierung abgetrennten Grobanteile nicht oder nicht stark kontaminiert sind, so daß derartige Grobanteile zur Entlastung der erfindungsgemäßen Vorrichtung vorrangig für eine Deponierung oder Weiterverwendung abgeschieden werden können. Wie bereits weiter oben angedeutet, können allerdings Agglomerate von Feinanteilen sich scheinbar wie Grobanteile verhalten und Schadstoffe in sich einschließen, so daß es empfehlenswert ist, auch die Grobanteile, jedenfalls bei einem entsprechenden Verdacht und bei einer entsprechenden Konsistenz des aufzubereitenden Materials, zunächst einmal per Ultraschall mit Energie zu beaufschlagen, um gegebenenfalls solche Agglomerate in die Feinanteile zu zertrennen, die dann entsprechend ihrer Größe klassiert werden können.

Es können auch mehrere Klassierungseinrichtungen vorgesehen sein. Vorzugsweise könnte der entsprechenden Energiebeaufschlagungs-Einrichtung eine Klassierungseinrichtung vorgeschaltet und eine Klassierungseinrichtung nachgeschaltet werden, wobei aber optional aber immer die Möglichkeit bestehen kann, bereits klassiertes Material vorsorglich noch einmal durch dieselbe Energiebeaufschlagungs-Einrichtung hindurchzuleiten. Im wesentlichen wird allerdings immer die jeweils flüssigere Phase nach der Klassierung energiebeaufschlagt, um eine Dekontamination durchzuführen, so daß immer mehr gröbere und später auch feinere Festanteile aus dem aufzubereitenden Material abgeschieden und weiter entwässert werden können, während sich die Schadstoffe in der flüssigsten Phase sammeln. Diese flüssigste Phase kann dann, vorzugsweise über eine separate und an sich bekannte Wasseraufbereitungsanlage, ihrerseits dekontaminiert werden, wonach dann das entsprechend gereinigte Prozeßwasser für das erfindungsgemäße Aufbereitungsverfahren wieder verwendet werden kann.

Ebenso wie die entsprechende Aufbereitungsanlage ist auch vorzugsweise die erfindungsgemäße Vorrichtung mobil in einem transportablen Container oder in einer sonstigen verfahrbaren Einrichtung betriebsfertig untergebracht.

Sowohl die erfindungsgemäße Anlage als auch die Wiederaufbereitungsanlage können also in den Bereich beispielsweise zu dekontaminierender Gewässer für eine bestimmte Aufbereitungszeit verbracht und bereitgestellt werden.

Ein Ausführungsbeispiel, aus dem sich weitere erfinderische Merkmale ergeben, ist in der Zeichnung dargestellt.
Es zeigen:
- Fig. 1: eine Art Blockschaltbild für ein Ausfühführungsbeispiel für eine erfindungsgemäße Vorrichtung bzw. ein entsprechendes System,
- Fig. 2: ein Ablaufdiagramm bzw. Flußdiagramm für die beispielhafte Durchführung des erfindungsgemäßen Verfahrens,
- Fig. 3: eine schematisch-perspektivische Ansicht einer Energiebeaufschlagungsrinne,
- Fig. 4: die Rinne gemäß Fig. 3 in der Draufsicht,
- Fig. 5: die Rinne gemäß Fig. 3 und 4 in einer Seitenansicht und
- Fig. 6: die Rinne gemäß den Fig. 3 bis 5 in einer Stirnansicht.

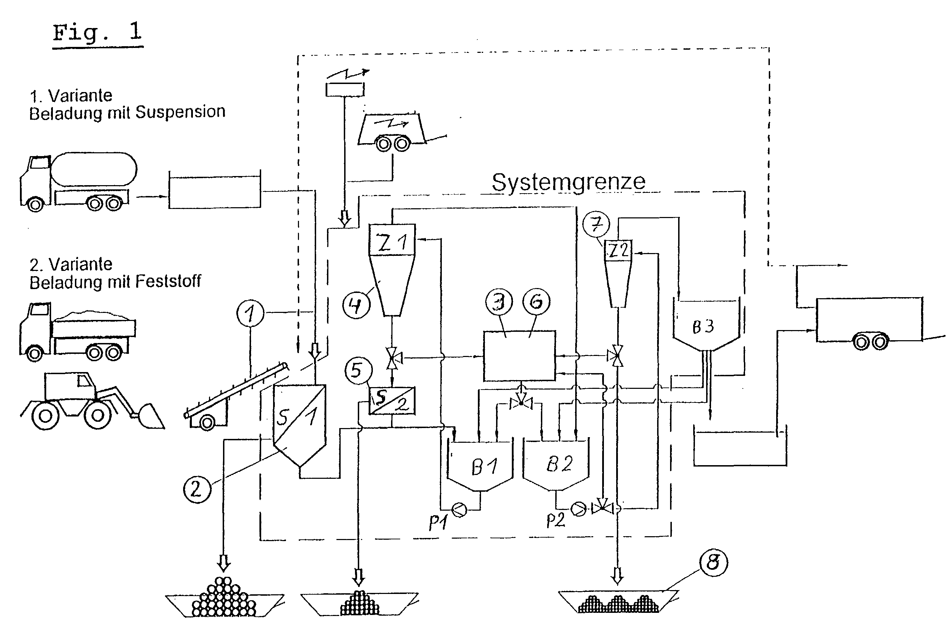

Fig. 1 zeigt eine Art Blockschaltbild für ein Beispiel einer erfindungsgemäßen Vorrichtung bzw. eines erfindungsgemäßen Systems.

Dabei ist davon auszugehen, daß alle diejenigen Komponenten der Vorrichtung, die sich innerhalb des von der "Systemgrenze" umrahmten Bereiches befinden, als mobile Einheit betriebsfertig auf einem transportablen Container, beispielsweise einem handelsüblichen 20-Fuß-Container, untergebracht werden können.

Die gezeigte erfindungsgemäße Vorrichtung soll zur mobilen Aufbereitung von kontaminierten Schlamm- und Bodensedimenten, sowie zu deren Dekontaminierung eventuell schadstoffbelasteter Sedimentanteile, dienen.

Untersuchungen von Sedimentproben aus Seen, Flüssen und Hafenbecken haben gezeigt, daß die Gewässersedimente in vielen Fällen mit organischen und anorganischen Schadstoffen belastet sind. Weitergehende Analysen führen zu der sicheren Erkenntnis, daß sich die Schadstoffe vor allem im feinkörnigen Anteil des Körnungsspektrums an das Sediment anlagern, so daß also nicht alle Komponenten eines entsprechenden Sedimentes bzw. Baggergutes belastet sind. Aus diesem Grunde ist es durchaus sinnvoll, wenn es gelingt, die belasteten von den unbelasteten Komponenten zu trennen und nur die in der Menge reduzierte, mit Schadstoffen angereicherte Feinkornfraktion mit effektiven Verfahren zu reinigen bzw. zu dekontaminieren. Dabei soll diese Dekontaminierung möglichst energiesparend und kostengünstig, und letztlich auch raumsparend, möglich sein.

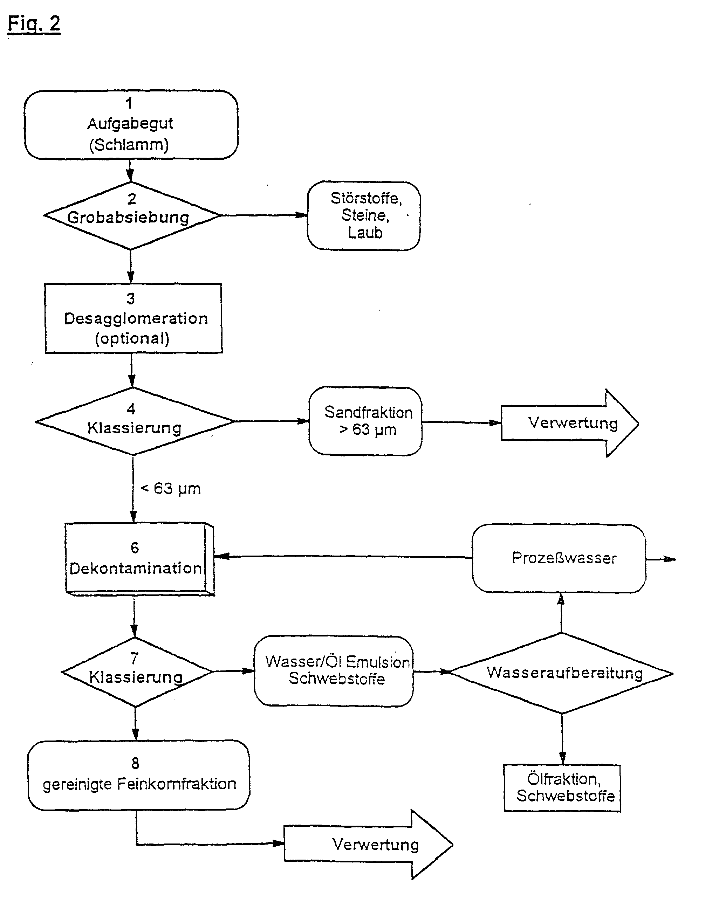

Dazu arbeitet die in Fig. 1 gezeigte Vorrichtung in der nachfolgend geschilderten Weise, die auch noch ergänzend durch das in der Fig. 2 gezeigte Verfahrens-Ablaufdiagramm verdeutlicht wird.

Zunächst einmal wird, beispielsweise mit einem entsprechenden Lastwagen, auf einer Ladefläche oder in einem Tank, das aufzubereitende Material angeliefert, und zwar entweder als Feststoff oder als fließfähige Suspension, wobei letztere beispielsweise auch mit einem Saugbagger direkt aus einem Gewässer entnommen werden könnte. Feststoffe würden über eine Fördereinrichtung 1 in die Vorrichtung eingegeben. Das Material gelangt zunächst einmal in eine Siebeinrichtung S1.

Eine fließfähige Suspension würde über einen Zwischenbehälter letztlich ebenfalls in diese Siebeinrichtung S1 eingegeben, beispielsweise unter Verwendung einer Dickstoffpumpe als eine Art Schlamm. In die Siebeinrichtung S1 eingegebene Feststoffe oder eine zu dicke Suspension könnten durch Zugabe von Wasser fließfähiger bzw. überhaupt fließfähig aufbereitet werden.

In der Siebeinrichtung S1 erfolgt zunächst einmal eine Grobabsiebung. Entsprechendes abgesiebtes Grobgut, beispielsweise mit einem Durchmesser von größer als 6 mm, das z.B. aus Steinen, Laub, Holzteilen und dergleichen bestehen kann, wird abgetrennt und verläßt die mobile Anlage. Es ist davon grundsätzlich auszugehen, daß dieses Grobgut von eventuellen Schadstoffen unbelastet ist, so daß dieses Grobgut unmittelbar deponiert oder gegebenenfalls auch verwendet werden kann.

Das gegebenenfalls suspendierte, weiter aufzubereitende Material aus der Siebeinrichtung S1 wird in einen ersten Behälter B1 eingeleitet. In diesem Behälter befindet sich ein Rührer, der das Material homogenisiert und ein Aussedimentieren verhindern soll.

Aus dem Behälter B1 könnte dieses aufzubereitende Material, das auch weiterhin die kontaminierenden Schadstoffe enthält, einer ersten Klassierungseinrichtung 4, beispielsweise in Form eines ersten Zyklons Z1, zugeführt werden, und zwar mit einer Pumpe P1.

Mit dieser ersten Klassierungseinrichtung 4 erfolgt eine erste Klassierung. Dies bedeutet, daß eine "Sandfraktion" genannte Fraktion als nächstfeinere Grobgutstufe mit Teilchen beispielsweise größer als 0,06 mm über den Unterlauf des Zyklons Z1 (Apex) abgeschieden wird, und zwar über eine Schwingsiebeinrichtung S2, in der diese Sandfraktion vor dem Verlassen der Anlage noch einmal entwässert wird. Auch dieses Grobgut der zweiten Stufe könnte dann deponiert oder wiederverwendet werden.

Das aus dem Zyklonüberlauf (Vortex) abgeschiedene, weiter belastete Material wird als wiederum flüssigere Phase einem Behälter B2 zugeleitet.

Unter Umständen enthält aber das zunächst in den Behälter B1 eingeleitete aufzubereitende Material Agglomerate, die sich scheinbar wie gröbere Bestandteile verhalten, also Körper bilden, die größer als etwa 0,06 mm sind. Derartige Verklumpungen können beispielsweise bei einer sehr bindigen Konsistenz des aufzubereitenden Materials auftreten, z.B. wenn das Material Kleie oder dergleichen, enthält. In einem solchen Falle kann dann nicht unbedingt davon ausgegangen werden, daß die aus dem Unterlauf des Zyklons Z1 über die Siebeinrichtung S2 abgegebene "Sandfraktion" völlig unbelastet von kontaminierenden Stoffen ist, da diese Sandfraktion Agglomerate enthalten könnte, die entsprechende Schadstoffe noch in sich einschließen.

Falls diese Möglichkeit in Betracht gezogen werden muß, könnte das Material aus dem Behälter B1, bevor es in den Zyklon Z1 gelangt, in eine Energiebeaufschlagungs-Einrichtung 3,6 eingeleitet werden, um zunächst einmal eine Desagglomeration durchzuführen und die entsprechenden Agglomerate aufzuspalten. Genausogut könnte aber auch optional die aus dem Zyklon Z1 gelangende Sandfraktion erst noch einmal der entsprechenden Energiebeaufschlagungseinrichtung 3,6 zugeleitet werden, statt diese durch die Siebeinrichtung S2 unmittelbar aus der Anlage abzugeben.

Nach dem Durchlauf der Energiebeaufschlagungseinrichtung 3,6 könnte das entsprechende Material dann zunächst einmal wieder in den Behälter B1 abgegeben werden, und erst danach der eigentlichen Klassierung in der Klassierungseinrichtung 4, dem Zyklon Z1 zugeführt werden.

Letztlich gelangt jedenfalls nach der Klassierung, eventuell nach einer zur vorherigen Durchführung einer Desagglomeration in der Energiebeaufschlagungseinrichtung 3,6, die flüssigere Phase aus dem Zyklonüberlauf des Zyklons Z1 in den Behälter B2.

Aus diesem Behälter B2 wird das aufzubereitende Material mit einer Pumpe P2 einer zweiten Klassierungseinrichtung 7, nämlich zweiten Zyklonen Z2, zugeleitet. Es könnte aber auch zunächst einmal mittels der Pumpe P2 direkt in die Energiebeaufschlagungseinrichtung 3,6 eingeleitet werden, um zunächst einmal dekontaminiert zu werden und nach Durchfließen der Energiebeaufschlagungs-Einrichtung 3,6 wieder in den Behälter B2 zurückzugelangen. Bei der Dekontaminierung in der Energiebeaufschlagungs-Einrichtung 3,6 werden, ähnlich wie zuvor bei der Desagglomeration geschildert, diesmal die Schadstoffe von den noch im aufzubereitenden Material vorhandenen Festanteilen getrennt.

In der zweiten Klassierungseinrichtung 7 wird wiederum das aufzubereitende Material in eine festere und eine flüssigere Phase getrennt, wobei die festere Phase in einen Entwässerungscontainer 8 als gereinigtes Feinkorn abgegeben wird, wenn das aus dem Behälter B2 stammende Material vor der Klassierung in der Energiebeaufschlagungs-Einrichtung 3,6 tatsächlich dekontaminiert worden ist, also tatsächlich das Feinkorn entsprechend gereinigt worden ist. Ansonsten könnte alternativ oder zusätzlich das Feinkorn aus den Unterläufen der Zyklone Z2 zunächst einmal über ein Mehrwegeventil in die Energiebeaufschlagungs-Einrichtung geleitet werden und somit, gegebenenfalls nochmals, dekontaminiert werden und erst einmal wieder in den Behälter B2 gelangen.

Das aus dem Behälter B2 stammende Material kann also vor und/oder nach der zweiten Klassierung, gegebenenfalls sogar mit mehrfachen Umläufen, in der Energiebeaufschlagungs-Einrichtung 3,6 dekontaminiert werden, bis sichergestellt ist, daß das in den Entwässerungscontainer 8 gelangende Feinkorn tatsächlich gereinigt, d.h. dekontaminiert, ist.

In der zweiten Klassierungseinrichtung 7 werden vorzugsweise mehrere Zyklone Z2 zueinander parallel geschaltet verwendet, um an dieser Stelle den gleichen Durchsatz von aufzubereitendem Material pro Zeiteinheit zu ermöglichen, wie in dem aufgrund seines anderen Trennschnittes größeren Zyklon Z1 der ersten Klassierungseinrichtung 4, so daß in der gesamten Vorrichtung das Material mit etwa derselben Geschwindigkeit gefahren werden kann.

Aus den Überläufen der Zyklone Z2 gelangt die wiederum flüssigere Phase in einen Behälter B3, während das gereinigte Feinkorn entwässert und einer Deponierung oder Verwertung zugeführt wird.

Das flüssige Material aus dem Behälter B3 kann als bisher ungereinigtes Prozeßwasser eventuell den Behältern B1 oder B2 wieder zugeführt werden, so daß es die vorgeschilderten Kreisläufe noch einmal durchläuft, wobei dann allerdings davon auszugehen ist, daß sich in den Behältern B1 und B2 mit der Zeit Schadstoffe anreichern. Diese Schadstoffe gelangen schließlich immer wieder in das im Behälter 3 vorhandene flüssige Material.

Dies bedeutet, daß das Material aus dem Behälter B3 letztlich als flüssige Phase über einen Zwischenbehälter in eine Wasseraufbereitungsanlage gelangen muß, damit dort, in an sich bekannter Weise, vorzugsweise wiederum mit einer mobilen, aber separaten Einheit, der flüssigen Phase die Schadstoffe entzogen werden, so daß das übrigbleibende Wasser wiederum als Prozeßwasser dem Aufbereitungsverfahren zugeführt werden könnte, beispielsweise über eine in der Fig. 1 mit gestrichelten Linien angedeutete Verbindung bis in die Siebeinrichtung S1. Auch an anderer Stelle könnte dieses Prozeßwasser dem Verfahrensablauf wieder zugeführt werden.

Aus der Wasseraufbereitung übrig bleiben letztendlich die Schadstoffe, beispielsweise Ölfraktion oder Schwebstoffe, die in sachgerechter Weise entsorgt werden müssen, gegebenenfalls nach einer weiteren Aufbereitung.

Durch die verschiedenen Klassierungsstufen kann das letztlich aufzubereitende Wasser immer mehr mengenmäßig entlastet werden, so daß für die endgültige Wasseraufbereitung eine sehr kompakte, an sich bekannte Wasseraufbereitungsanlage verwendet werden kann. Die durch die jeweiligen Klassierungen abgeschiedenen gröberen Anteile können unbelastet weitgehend einfach und kostengünstig deponiert oder sogar wiederverwendet werden. Ebenso wird wassersparend auch das Prozeßwasser nach der Wasseraufbereitung wiederverwendet. Es bleiben also nur minimale Rückstände nach der Wasseraufbereitung zur Entsorgung zurück.

Insgesamt kann damit die erfindungsgemäße Vorrichtung auch besonders energiesparend arbeiten, wobei für die Energieversorgung, wie in der Fig. 1 angedeutet, beispielsweise ein mobiles Stromaggregat oder ein Netzanschluß bereitgestellt werden kann.

Wie bereits erwähnt, kann das Ablaufdiagramm in der Fig. 2 noch einmal zum Überblick über das im Zusammenhang mit der Vorrichtung gemäß der Fig. 1 geschilderte Verfahren dienen, wobei in der Fig. 1 enthaltene Bezugszahlen zum Teil an entsprechender Stelle im Ablaufdiagramm der Fig. 2 aufgenommen sind, so daß die Fig. 1 und die Fig. 2 insbesondere parallel betrachtet werden können.

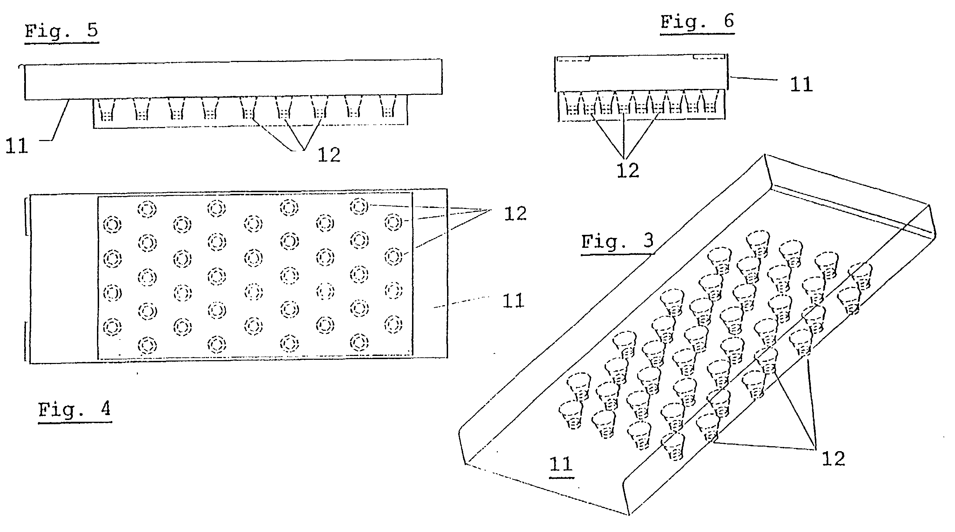

Die Fig. 3 bis 6 zeigen schematisch quasi das Kernstück der Energiebeaufschlagungs-Einrichtung 3,6 gemäß der Fig. 1.

Es handelt sich hierbei um eine Rinne, wie sie schematisch in Fig. 3 in perspektivischer Ansicht angedeutet ist. Diese Rinne kann von dem zu dekontaminierenden fließfähigen Material durchflossen werden, wobei die Fließgeschwindigkeit über die einstellbare Neigung der Rinne ebenfalls einstellbar ist, wodurch gleichzeitig auch die Verweilzeit des Materials und damit die Behandlungsdauer des Materials in der Rinne eingestellt wird.

Die Rinne weist insbesondere einen Boden 11 auf, an dessen Unterseite eine Vielzahl von Ultraschallquellen 12 angeordnet sind. Diese Ultraschallquellen 12, die an sich in ihrer Ausführung bekannt sind, sind gleichmäßig verteilt an der Unterseite des Bodens 11 angeordnet. Mit Hilfe dieser Ultraschallquellen wird der Boden 11 periodisch, relativ hochfrequent zu Schwingungen bzw. Vibrationen angeregt, die sich auf das aufzubereitende bzw. zu dekontaminierende Material in der Rinne übertragen, insbesondere auf das in dem fließfähigen Material enthaltene Wasser, indem es dadurch zu Kavitationen kommt, die letztlich für die Abspaltung von Schadstoffen von in dem Material enthaltenen Feststoffen bzw. für die Spaltung von eventuellen Agglomeraten sorgen.

Die Fig. 4 bis 6 zeigen weitere Ansichten der entsprechenden Rinne. In diesen Ansichten ist noch einmal insbesondere die Anordnung der Ultraschallquellen 12 an der Unterseite des Bodens 11 der Rinne zu erkennen. Vorzugsweise sind die Ultraschallquellen 12 unmittelbar an der Unterseite des Bodens 11 mit einem geeigneten Klebemittel angeklebt.

Zur Energieversorgung kann die dargestellte Rinne über einen speziellen Generator, mit einer Leistung von beispielsweise 2 KW verfügen, wobei von dem Generator die Verbindung mit den Ultraschallquellen 12 über ein spezielles mehradriges Kabel hergestellt wird. Die Ultraschallquellen sind dabei durch Gehäuse, beispielsweise gegen Spritzwasser, geschützt.

An dieser Stelle sei bemerkt, daß gegebenenfalls die Ultraschallquellen 12 durch andere geeignete Schwingungsanregungsorgane im Rahmen der Erfindung ersetzt werden könnten, indem z.B. piezoelektrische Effekte oder dergleichen ausgenutzt werden.

## Patentansprüche

1. Vorrichtung zur Aufbereitung, insbesondere zur Dekontamination, von Material, vorzugsweise von Sedimentationsablagerungen vom Grund eines Gewässers oder aus Ölabscheidern, Sandfängen oder dergleichen, die eine Einrichtung zur Energiebeaufschlagung des Materials mittels Ultraschalles aufweist und wenigstens eine entsprechende Ultraschallquelle umfaßt, wobei die Einrichtung zur Energiebeaufschlagung einen in Vibrationen bzw. Schwingunger: versetzbaren Boden umfaßt, auf dem aufzubereitendes Material oder ein Anteil davon aufbringbar ist, und wobei an diesem Boden zu seiner Bewegungsanregung eine Mehrzahl der Ultraschallquellen angeordnet ist,
**dadurch gekennzeichnet,**
**daß** der Boden (11) zur Behandlung von fließfähigem Material Bestandteil einer Rinne ist, daß die Rinne neigungsverstellbar angeordnet ist und daß die Ultraschallquellen (12) in Kontaktanlage, ggf. unter Verwendung eines Verbindungsmaterials, mit der Unterseite des Bodens (11) sind.

2. Vorrichtung nach Anspruch 1, **dadurch gekennzeichnet, daß** die Ultraschallquellen (12) gleichmäßig, matrixartig verteilt, wenigstens in einem Abschnitt des Bodens (11), angeordnet sind.

3. Vorrichtung nach Anspruch 1 oder 2, **dadurch gekennzeichnet, daß** sie wenigstens eine Klassierungseinrichtung (Z1,Z2) umfaßt, die der Einrichtung zur Energiebeaufschlagung (3,6) vorgeschaltet und/oder nachgeschaltet ist.

4. Vorrichtung nach Anspruch 3, **dadurch gekennzeichnet, daß** die Klassierungseinrichtung ein Zyklon (Z1,Z2) ist.

5. Vorrichtung nach einem oder mehreren der vorhergehenden Ansprüche, **dadurch gekennzeichnet, daß** sie als mobile Anlage in einem transportablen Container betriebsfertig untergebracht ist.

## Claims

1. A device for the processing, particularly for the decontaminating of material preferably of sedimentary deposits present at the bottom of a body of water or in oil separators, sand catchers or the like, said device comprising a device for the impingement by energy of the material using ultrasound and including at least one corresponding ultrasound source, wherein the device for the impingement by energy includes a bottom which can be caused to vibrate or oscillate and on to which the material, or a proportion of it, can be conveyed, and wherein a plurality of ultrasound sources is arranged on said bottom for the purpose of causing it to move, **characterised in that** the bottom (11) is a constituent part of a channel for the treatment of fluid material, that the channel is arranged so as to be capable of tilting and that the ultrasound sources (12) are held in contact with the undersurface of the bottom (11), if necessary by the use of a connecting means.

2. A device according to claim 1, **characterised in that** the ultrasound sources (12) are distributed symmetrically in the form of a matrix arranged at least in one section of the bottom (11).

3. A device according to claim 1 or 2, **characterised in that** it includes at least one classifying unit (Z1, Z2) which is mounted so as to operate before and/or after the device for impingement by energy (3, 6).

4. A device according to claim 3, **characterised in that** the classifying unit is a cyclone (Z1, Z2).

5. A device according to one or several of the preceding claims, **characterised in that**, as a mobile assembly, it is accommodated ready for operation within a transportable container.

## Revendications

1. Dispositif de préparation, en particulier de décontamination, de matière, de préférence de dépôts de sédimentation du fond d'un bassin d'eau ou de séparateurs d'huile, de séparateurs de sable ou d'installations similaires, qui comprend un système pour l'injection d'énergie de la matière au moyen d'ultrasons et présente au moins une source d'ultrasons correspondante, le système d'injection d'énergie comprenant un socle pouvant être mis en vibration ou en oscillation sur lequel la matière à traiter ou une partie de celle-ci peut être déposée, une pluralité de sources d'ultrasons étant agencée sur le socle afin de le mettre en mouvement,
**caractérisé en ce que** le socle (11) pour le traitement de matière coulante fait partie d'une rigole, **en ce que** la rigole peut être réglée en inclinaison, et **en ce que** les sources d'ultrasons (12) sont disposées en contact avec la face inférieure du socle (11), le cas échéant par l'utilisation d'un matériau de liaison.

2. Dispositif selon la revendication 1, **caractérisé en ce que** les sources d'ultrasons (12) sont agencées dans une répartition matricielle régulière au moins dans une section du socle (11).

3. Dispositif selon l'une des revendications 1 ou 2, **caractérisé en ce qu'**il comprend au moins un système de calibrage (Z1, Z2) qui est agencé en amont et/ou en aval du système d'injection d'énergie (3, 6).

4. Dispositif selon la revendication 3, **caractérisé en ce que** le système de calibrage est un cyclone (Z1, Z2).

5. Dispositif selon une ou plusieurs des revendications précédentes, **caractérisé en ce qu'**il est logé prêt à l'emploi dans un conteneur transportable en tant qu'installation mobile.
